# EUROPEAN PATENT SPECIFICATION

(11) **EP 0 621 945 B1**
(45) Date of publication and mention of the grant of the patent: **15.01.1997**
(21) Application number: 92915937.4
(22) Date of filing: 17.07.1992
(51) Int. Cl.: G01L 5/06

(54) **A DEVICE FOR INDICATION OF A PREDETERMINED TENSION OF ELONGATE FLEXIBLE ELEMENTS**
VORRICHTUNG ZUR ANZEIGE EINER BESTIMMTEN SPANNUNG IN LANGEN FLEXIBLEN GLIEDERN
DISPOSITIF SERVANT A INDIQUER UNE TENSION PREDETERMINEE DANS DES ELEMENTS SOUPLES ALLONGES

(30) Priority: 22.07.1991 SE 9102218
(43) Date of publication of application: 02.11.1994
(73) Proprietor: AB VOLVO, 405 08 Göteborg (SE)
(72) Inventor: SÖDERMALM, Svante, S-414 66 Göteborg (SE)
(74) Representative: Franzén, Lars Hjalmar
(86) International application number: SE9200520
(87) International publication number: WO9302343

(56) References cited:
- US-A- 3 570 307
- US-A- 3 832 899
- US-A- 4 437 352
- US-A- 4 860 597

## Description

The subject invention concerns a device for indication of a predetermined tension of elongate flexible elements, primarily of belts incorporated in belt transmissions, e. g. driving belts used in combustions engines and running around belt pulleys to drive the generator, the radiator fan, the servo pump, air conditioning unit, etcetera.

During the assembly of new as well as reconditioned combustion engines, it is customary to simultaneously install the driving belt or belts driving the equipment items mentioned above. In a manner similar to that used when worn-out belts are replaced by new ones, these belts are placed loosely around the various pulleys with the adjustment device of e.g. the generator in a non-tightened condition. The set screws of the adjustment device is then tightened by means of a suitable tool, such as a screwdriver, while at the same time the belt is tightened by means of another suitable tool, e.g. a lever acting on the generator so as to force the latter outwards. The magnitude of the belt tension is usually checked by the operator who, for instance with the aid of his thumb, depresses the belt at a point intermediate two adjacent pulleys, and the tightening force or belt tension is normally considered to be "correct" if the force exerted on the belt in this manner amounts to a depression corresponding approximately to 10 mm.

However, this method does not make it possible to ascertain with sufficient certainty the actual value of the belt tension, in addition to which the tension may vary within very wide limits from one engine to the next. Some belts therefore wear out prematurely as a result of slippage.

Since in modern engines, particularly motor vehicle engines, the driving belts are dimensioned for a comparatively long serviceable life, which is a feature requested by the consumer, it is necessary to make arrangements ensuring that a value of the tensional force may be achieved in a reproduceable manner and at a carefully predetermined level with only very minute tolerance deviations.

The purpose of the subject invention is to provide a device meeting the demands outlined above in a simple, rapid and reliable manner.

This purpose is achieved in that the device comprises a base, a hub associated with the base and protruding therefrom and including a means for supporting the elongate element, two links pivotally connected to the base at their first, inner end and projecting in opposite directions from the base essentially at right angles to the hub, each link formed at its opposite, outer end with an abutment, said abutments being equidistantly spaced from the hub to support the elongate element, and a resiliently yielding member connected to the links and possessing a reactional force corresponding to the predetermined tension of the elongate element, said links being arranged for synchronized pivotal movement between two stable end positions while passing an imaginary line interconnecting the abutment means past the hub for snap-over movement, the elongate element arranged, when the links assume one of their end positions, to be moved to a position of abutment against the link abutments and the hub support surface and to be tightened upon the synchronized pivotal movement of the links against the action of the resiliently yieldable member, until said elongate element extends along an essentially straight line interconnecting the abutments, at which moment the predetermined tension of the elongate element and the reactional force of the resiliently yieldable means become equal and, in response to the resiliently yieldable member, said links snap over to their opposite end position, said snap-over movement per se being an indication of obtainment of the predetermined tension of said elongate element.

The invention will be described in closer detail in the following with reference to the accompanying drawings, illustrating a particular, at the moment preferred embodiment of the device in accordance with the invention. In the drawing figures:
Fig. 1 illustrates the device in a front view which is partly cut in order to show the components behind,
Fig. 2 illustrates the same device in a view from above, and partly broken and partly cut along line II-II of Fig. 1, and
Fig. 3 illustrates the device as seen from the left end in accordance with Fig. 1 and partly in a transverse sectional view.
Fig. 4 shows one example of using the device to tighten driving belts of motor vehicle engines, and
Figs. 5 - 7 illustrates succesive sequences of the tightening operation.

As outlined in the aforegoing, the device indicated generally by numeral 1, which device could also be called an indicator or a gauge, is intended to indicate the existence of a predetermined tension of the elongate flexible element 2.

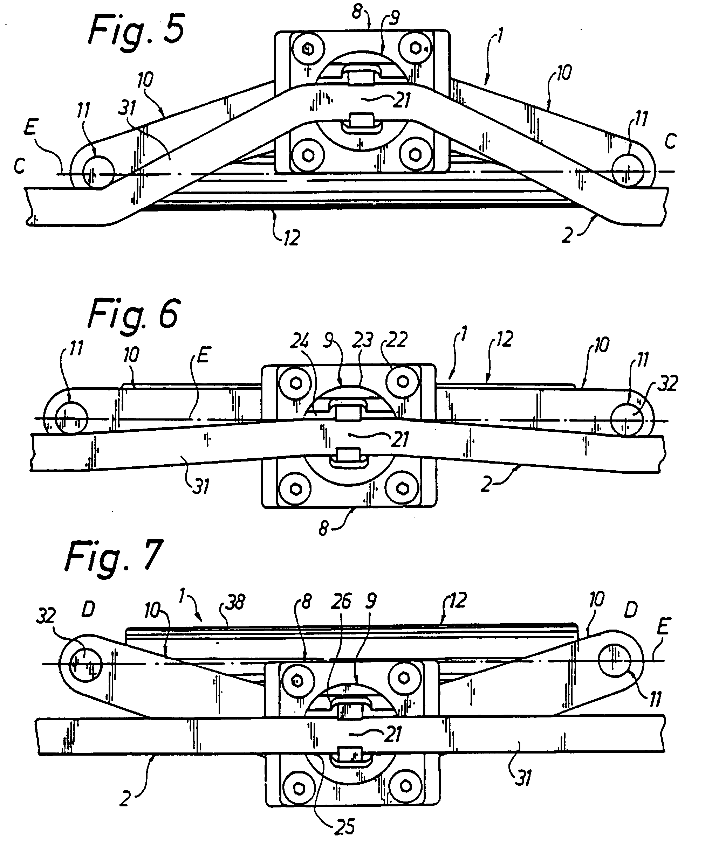

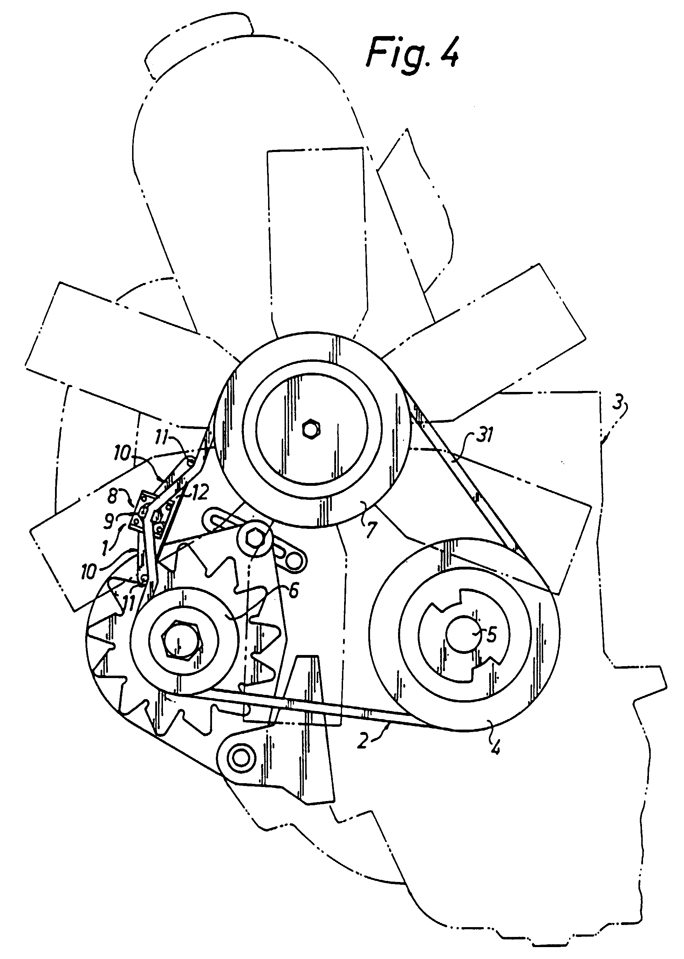

As appears from Fig. 4, the flexible element 2 in accordance with the embodiment described is in the form of a conventional driving belt 31 of a combustion engine 3. The driving belt is wrapped around a driving pulley 4 mounted on the free end of a crankshaft 5, a generator pulley 6, and a radiator fan pulley 7. More than one driving belt 31 may be provided, for instance driving belts arranged in pairs, or driving belts arranged to drive additional equipment, such as the servo pump for servo control and air-condition compressors.

The main components of the indicator 1 are a base 8, a hub 9, two links 10, each with an abutment 11, and a resiliently yieldable means 12.

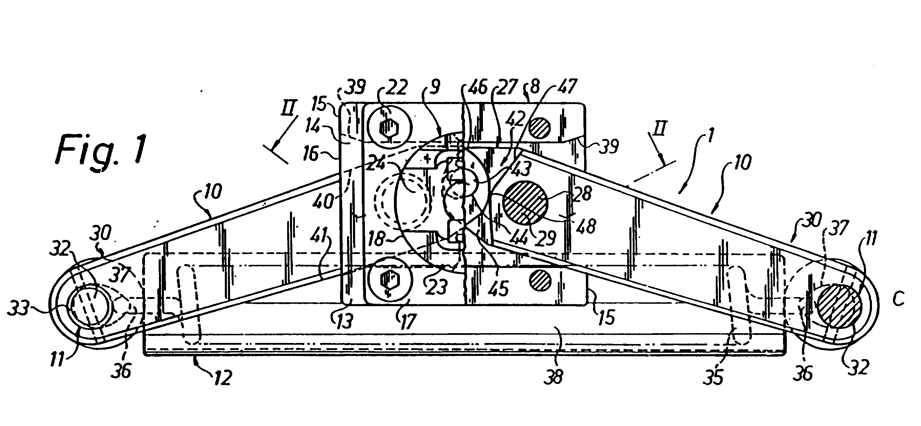

The base 8 comprises a rectangular metal support plate 13 with a recess 14 formed therein e.g. through milling and which recess, as seen from the front according to Fig. 1, extends horizontally between the opposite edge faces 15 of the support plate 13. The recess 14 is open at the ends and is also open outwards, i.e. towards the front as seen in Fig. 1.

In addition, the base 8 comprises a likewise rectangular covering plate 16 having the same outline configuration as the support plate 13 and also made from metal. The covering plate covers the support plate, and consequently the recess 14 formed therein, in the outwards direction in such as manner that a through-channel is defined between the plates 13 and 16.

As seen from the front, the hub 9 has an essentially circular configuration and preferably it is made from metal or some suitable plastics material. The hub 9 projects from the base 8, in Fig. 1 towards the viewer, and it is secured to the base by means of an attachment plate 17 of metal having an outline configuration essentially agreeing with that of the support and covering plates 13, 16. The attachment plate 17 comprises a central circular aperture 18 with a shoulder 19 therein, in which aperture the hub 9 is rotationally mounted by means of a circularly cylindrical flange 20 abutting against the shoulder 19. In this manner, the hub may be turned about its centre axis 21 for a purpose to be described in closer detail in the following.

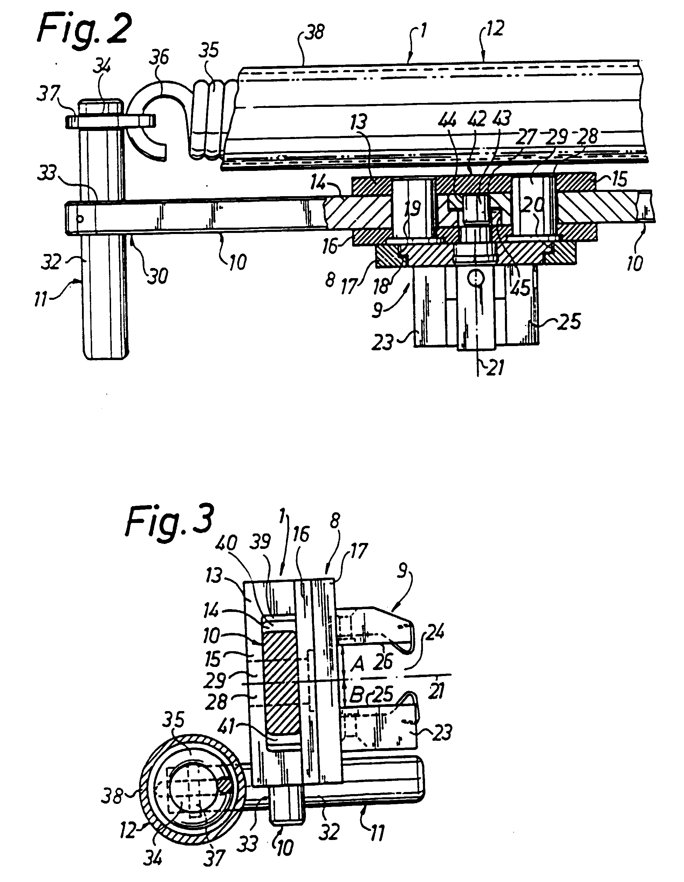

As appears above all from Figs. 2 and 3, the support plate 13, the covering plate 16, and the attachment plate 17 are joined together by means of fasteners 22, for instance screws, rivets, and the like, with the plate side faces in abutting relationship in such a manner as to form a housing.

To revert to the hub 9, the latter has a support 23 for the belt 31 and in accordance with the embodiment illustrated the support is formed by a transverse slit 24 which is open outwards and at its ends for reception of the belt 31. The slit 24 is essentially parallel with the recess 14 described in the aforegoing and comprises two parallel spaced-apart support faces 25, 26. As appears from Fig. 3, these support faces are spaced different distances A and B from the centre axis 21 of the hub and are intended for different belts which, although of different thicknesses, are to be given the same degree of taugtness.

The two links 10 are configured as elongate, rather flat arms and they, too, are preferably made from metal. At one first, inner end 27, the links 10 are pivotally mounted to the base 8, more precisely in the recess 14 of the support plate 13, and they extend in opposite directions therefrom, essentially at right angles to the hub 9. In the area of their inner ends 27 the links 10 and the support and covering plates 13, 16 are formed with aligned holes 28 for reception therein of pivot pins 29 or similar means for the pivotal connection of the links 10 to the base 8.

At the opposite, outer link ends 30 each link 10 supports an abutment 11 for engagement with the belt 31. In accordance with the embodiment illustrated, these abutments are in the shape of pins 32, each one of which projects in both directions from its associated link 10 in parallel with the hub 9. The pins 32 are spaced equal distances from the latter. One half of each pin 32 forms the abutment means 11 proper and projects in the same direction as the hub 9, thus allowing the belt 31 to run around these pin halves.

The pins 32 thus project through attachment holes 33 formed in the associated links 10, and the other half of each pin protrudes from the face of the links 10 opposite the abutments 11 so as to form a member 34 on which may be attached the resiliently yieldable means 12.

In accordance with the embodiment illustrated, the resiliently yieldable means 12 is a helical tension spring 35 the ends 36 of which are secured to the attachment member 34 of the pins 32, in this case by means of flat connective washers 37. As protection against possible clamping damages a protective sleeve 38 of plastics or a similar material is threaded onto the helical tension spring 35.

The helical tension spring 35 is dimensioned and calibrated so as to ensure that it exerts a reactional force corresponding to the predetermined tension of the belt 31. This reactional force or counter-force and tension, respectively, may typically mount to 425 + 25 N for a particular application.

The links 10 described previously are arranged to be shifted in synchrony between two stable end positions, C in Fig. 1 and D in Fig. 7 while passing an imaginary line E interconnecting the abutments 11, past the hub 9, i.e. the centre axis 21 thereof, and thus to snap over from one to the other end position.

In order to limit the angle of pivotment of the links 10 to say 60-80° and thus also to define the two stable end positions C, D of the links 10, the recess 14 in the support plate 13 described previously is formed with oblique abutment faces 39 adjacent its open ends near the plate edges 15. The inclination of each one of these oblique abutment faces 39 corresponds to essentially half the angle of pivotement, and under the action of the helical traction spring 35 the upper and lower edge faces 40, 41 on the links 10 may be moved to a position wherein they abut against the oblique abutments 39.

Adjacent the inner ends of the links 10, at a point interiorly of the pivot pins 29, i.e. at a point intermediate the latter and the free link ends, see Figs. 1 and 2, a synchronizing mechanism 42 interconnects the links 10 to ensure their synchronized pivotal movement. In accordance with the embodiment illustrated, this synchronizing mechanism comprises a metal pin 43 extending through aligned holes 44 formed in the links and having a height essentially agreeing with the thickness of each link, whereby it will be enclosed by the links and not interfere with the pivotal movement of the links about the pivot pins 29 in the recess 14.

In the area of the synchronizing mechanism 42 the links 10 are formed with facing recesses 45, whereby the innermost portions of the inner ends 27 of the links 10 will overlap and have face-to-face contact, the synchronizing mechanism 42 being arranged in the area of these end portions.

The links 10 are formed with inner, evenly curved end edge faces 46, each in rolling abutment against its associated counter edge faces 47 formed by the point where the associated recess 45 merges into the links 10 and having straight side portions and a centrally positioned cam nose 48. The edge faces 46 and the counter edge faces 47 thus form cooperating cam faces which, upon synchronized pivotal movement of the links against the action of the helical tension spring 35 determine the point where the snap-over action is to take place.

The hole 44 in one of the links 10 is essentially circular whereas the hole 44 in the opposite link is essentially oblong with its major axis extending in the lengthwise direction of the associated link. In this manner the pin 43 is allowed some lateral movement, in the embodiment illustrated over a distance corresponding to approximately 1/4 of the diameter of the pin 43, in compensation for the mutual lateral movement of the holes 44 over the same distance that will occur when the links 10 pivot about the pivot pins 29 from one to the other of the two stable end positions C, D defined by the abutments 39 in the recess 14.

The function of the indicator 1 described in the aforegoing and illustrated in Figs. 4 - 7 is as follows:

With the links 10 assuming their first, lower and stable end position C, see Figs. 4 and 5, the belt 31 may be placed around and in abutment against the two abutment means 11 on the links and against one of the support faces 25 in the slit 24 of the hub 9.

The belt 31 is then tightened, for instance by the generator pulley 6 being forced outwards, i.e. to the left as seen in Fig. 4, while the links 10 are pivoted in synchrony against the action of the helical tension spring 35 until the belt 31 extends along an essentially straight line between the abutment means, see Fig. 6.

At this moment, the predetermined tension of the belt 31 agrees with the dimensioned and calibrated counter-force of the helical tension spring 35, and under the influence of said helical tension spring, it effects snap-over of the links 10 to their second upper and stable end position D, see Fig. 7.

This snap-over movement is the audible and visible indication of obtainment of the predetermined tension of the belt 31.

In case a belt having a thickness which by a definite value exceeds the thickness of the belt illustrated in the drawings, is to be tightened to the same tension as belt 31, allowing the helical tension spring 35 to remain unchanged, the hub 9 is turned over half a revolution, in such a manner that the support face 26 in the slit 23 in the hub, which face is adapted to the thicker belt, will face downwards to support the belt between the abutment means 11.

## Claims

1. A device for indicating a predetermined tension of elongate flexible elements (2), comprising a base (8), a hub (9) associated with the base and protruding therefrom and including a means (23) for supporting the elongate element (2), two links (10) pivotally connected to the base (8) at their first, inner end (27) and projecting in opposite directions from said base (8) essentially at right angles to the hub (9), each link (10) formed at its opposite, outer end (30) with an abutment (11), said abutments (11) being equidistantly spaced from the hub (9) to support the elongate element (2), and a resiliently yielding member (12) connected to the links (10) and possessing a reactional force corresponding to the predetermined tension of the elongate element, said links (10) being arranged for synchronized pivotal movement between two stable end positions (C, D) while passing an imaginary line (E) interconnecting the abutment means (11) past the hub (9) for snap-over movement, the elongate element (2) arranged, when the links (10) assume one (C) of their end positions, to be moved to a position of abutment against the link abutments (11) and the support (23) of the hub (9) and to be tightened upon the synchronized pivotal movement of the links against the action of the resiliently yieldable member (12), until said elongate element extends along an essentially straight line between the abutments, at which time the predetermined tension of the elongate element and the reactional force of the resiliently yieldable member become equal and, in response to the resiliently yieldable member, said links snap over to their opposite end position (D), said snap-over movement per se being an indication of obtainment of the predetermined tension of said elongate element.

2. A device as claimed in claim 1, **characterized** in that the base (8) comprises both a support plate (13) formed with a recess (14) which is open outwards and at its ends for reception therein of the inner ends (27) of the links (10), and a covering plate (16) covering the recess in the support plate outwardly, and in that the support plate, the covering plate, and the links, in the area of their inner ends, are formed with aligned holes (28) for reception therein of pivot pins (29) by means of which the links are pivotally connected to the base.

3. A device as claimed in claim 2, **characterized** in that abutments (39) are provided in the recess (14) in the support plate (13) in order to limit the angle of pivotal movement of the links (10), said abutments thus determining the two stable end positions (C,D) of the links.

4. A device as claimed in any one of the preceding claims, **characterized** in that adjacent their inner ends (27) and at a point further inwards than the pivot pins (29), the links (10) are interconnected by means of a synchronizing mechanism (42) ensuring the synchronized pivotal movability of the links.

5. A device as claimed in claim 4, **characterized** in that said synchronizing mechanism (42) comprises a pin (43) extending through aligned holes (44) formed in the links (10), one of said holes being essentially circular whereas the other one is essentially oblong, whereby the pin is allowed some lateral movement in compensation for the mutual lateral movement of the holes occurring during the pivotal movement of the links about the pivot pins (29) between the two stable end positions (C, D).

6. A device as claimed in claim 5, **characterized** in that in the area of the synchronizing mechanism (42) the links (10) are formed with facing recesses (45), whereby the innermost portions of the inner ends (27) of the links overlap and abut one against the other and receive the synchronizing mechanism (42), and in that the links are formed with inner edge faces (46) in abutment against counter edge faces (47) formed in said links in the merger area between the latter and the recesses (45) so that the edge faces and the counter edge faces form cooperating cam faces which upon the synchronized pivotal movement of the links against the action of the resiliently yieldable member (12) determine the link snap-over point.

7. A device as claimed in any one of the preceding claims, **characterized** in that the hub (9) is connected to the base (8) by means of an attachment plate (17), said attachment plate together with the support plate (13) and the covering plate (16) being assembled by means of fastening means (22) in face-to-face relationship to form a housing, and in that the support (23) in the hub (9) is formed by a transverse slit (24) which is open outwards and at its ends in order to receive the elongate element (2).

8. A device as claimed in claim 7, **characterized** in that the hub (9) is arranged to be turned about a centre axis (21), and in that the slit (24) is formed with two parallel spaced apart support faces (25, 26) positioned at different distances (A, B) from the centre axis and intended to support elongate elements of two different thickneses that are to be tightened by a tightening force of equal magnitude, whereby the same device (1) may be used with these elements of different thicknesses while maintaining the magnitude of the reactional force of the resiliently yieldable member (12).

9. A device as claimed in any one of the preceding claims, **characterized** in that the abutments (11) at the outer ends (30) of the links (10) are in the shape of projecting pins (32) around which the elongate element (12) may be wrapped, said pins extending through attachment holes (33) formed in the associated link (10), the pins positioned on the link face opposite that on which the abutments are positioned, forming attachments (34) for securing the resiliently yieldable member (12).

10. A device as claimed in any one of the preceding claims, **characterized** in that the resiliently yieldable member (12) is a helical tension spring (35) the ends of which are secured to the attachments (34) of the pins (32) via connection washers (37), said spring being enclosed in a protective sleeve (38).

11. A device as claimed in any one of the preceding claims, **characterized** in that the elongate, flexible element (12) is a belt incorporated in a belt transmission, preferably a driving belt (31) carried about the pulleys (4, 65, 7) incorporated in a combustion engine.

## Patentansprüche

1. Vorrichtung zur Anzeige einer vorbestimmten Spannung in länglichen flexiblen Gliedern (2), mit einer Basis (8), einem der Basis zugeordneten und daraus vorragenden Zapfen (9), der ein Mittel (23) zum Stützen des länglichen Glieds (2) enthält, zwei Elementen (10), die an ihrem ersten, inneren Ende (27) schwenkbar mit der Basis (8) verbunden sind und in im wesentlichen rechten Winkel zum Zapfen (9) in entgegengesetzten Richtungen aus der Basis (8) vorragen, wobei jedes Element (10) an seinem gegenüberliegenden, äußeren Ende (30) mit einer Stoßfläche (11) ausgebildet ist, wobei die Stoßflächen (11) im gleichen Abstand von dem Zapfen (9) beabstandet sind und so das längliche Glied (2) stützen, und einem elastisch nachgebenden Teil (12), das mit den Elementen (10) verbunden ist und eine der vorbestimmten Spannung des länglichen Glieds entsprechende Reaktionskraft besitzt, wobei die Elemente (10) so angeordnet sind, daß sie zwischen zwei stabilen Endpositionen (C, D) eine synchronisierte Schwenkbewegung ausführen können, wobei sie eine die Stoßflächenmittel (11) verbindende gedachte Linie (E) am Zapfen (9) vorbei durchlaufen und dabei eine Überschnappbewegung ausführen, wobei das längliche Glied (2) so angeordnet ist, daß es, wenn die Elemente (10) eine (C) ihrer Endpositionen einnehmen, in eine Position des Anstoßens an die Elementanstoßflächen (11) und die Stütze (23) des Zapfens (9) bewegt und bei der synchronisierten Schwenkbewegung der Elemente gegen die Wirkung des elastisch nachgebenden Teils (12) gespannt wird, bis sich das längliche Glied entlang einer im wesentlichen geraden Linie zwischen den Stoßflächen erstreckt, wobei zu diesem Zeitpunkt die vorbestinmte Spannung des länglichen Glieds und die Reaktionskraft des elastisch nachgebenden Teils gleich werden und die Elemente als Reaktion auf das elastisch nachgebende Teil in ihre gegenüberliegende Endposition (D) überschnappen, wobei die Überschnappbewegung an sich eine Anzeige des Erreichens der vorbestimmten Spannung des länglichen Glieds ist.

2. Vorrichtung nach Anspruch 1, dadurch gekennzeichnet, daß die Basis (8) sowohl eine Stützplatte (13), die mit einer Ausnehmung (14) ausgebildet ist, welche nach außen hin und an ihren Ende zur Aufnahme der inneren Enden (27) der Elemente (10) offen ist, als auch eine Abdeckplatte (16), die die Ausnehmung in der stützplatte nach außen hin abdeckt, enthält, und daß die Stützplatte, die Abdeckplatte und die Elemente im Bereich ihrer inneren Enden mit aufeinander ausgerichteten Löchern (28) zur Aufnahme von Drehbolzen (29) ausgebildet sind, mittels derer die Elemente schwenkbar mit der Basis verbunden sind.

3. Vorrichtung nach Anspruch 2, dadurch gekennzeichnet, daß Stoßflächen (39) in der Ausnehmung (14) in der Stützplatte (13) vorgesehen sind, damit der Winkel der Schwenkbewegung der Elemente (10) begrenzt wird, so daß die Stoßflächen somit die beiden stabilen Endpositionen (C, D) der Elemente bestimmen.

4. Vorrichtung nach einem der vorhergehenden Ansprüche, dadurch gekennzeichnet, daß die Elemente (10) neben ihren inneren Enden (27) und an einer Stelle, die weiter innen liegt als die Drehbolzen (29), mittels eines Synchronisationsmechanismus (42) miteinander verbunden sind, welcher die synchronisierte Schwenkbewegbarkeit der Elemente gewährleistet.

5. Vorrichtung nach Anspruch 4, dadurch gekennzeichnet, daß der Synchronisationsmechanismus (42) einen sich durch die in den Elementen (10) ausgebildeten, aufeinander ausgerichteten Löcher (44) erstreckenden Stift (43 ) umfaßt, wobei eines der Löcher im wesentlichen rund, während das andere im wesentlichen länglich ist, wodurch dem Stift eine gewisse Seitwärtsbewegung als Ausgleich für die bei der Schwenkbewegung der Elemente um die Drehbolzen (29) zwischen den beiden stabilen Endpositionen (C, D) auftretende, gegenseitige Seitwärtsbewegung der Löcher gestattet wird.

6. Vorrichtung nach Anspruch 5, dadurch gekennzeichnet, daß die Elemente (10) in dem Bereich des Synchronisationsmechanismus (42) mit gegenüberliegenden Ausnehmungen (45) ausgebildet sind, wodurch sich die am weitesten innen liegenden Abschnitte der inneren Enden (27) der Elemente überlappen und aneinanderstoßen und den Synchronisationsmechanismus (42) aufnehmen, und daß die Elemente mit inneren Randflächen (46) ausgebildet sind, die an Gegenrandflächen (47) stoßen, welche im Übergangsbereich zwischen den Elementen und den Ausnehmungen (45) in den Elementen ausgebildet sind, so daß die Randflächen und die Gegenrandflächen zusammenwirkende Nockenflächen bilden, die bei der synchronisierten Schwenkbewegung der Elemente gegen die Wirkung des elastisch nachgebenden Teils (12) den Überschnapp-Punkt der Elemente bestimmen.

7. Vorrichtung nach einem der vorhergehenden Ansprüche, dadurch gekennzeichnet, daß der Zapfen (9) mittels einer Befestigungsplatte (17) mit der Basis (8) verbunden ist, wobei die Befestigungsplatte zusammen mit der Stützplatte (13) und der Abdeckplatte (16) mittels Befestigungsmitteln (22) in Fläche an Fläche liegender Beziehung so zusammengebaut werden, daß sie ein Gehäuse bilden, und daß die Stütze (23) in dem Zapfen (9) durch einen Querschlitz (24) gebildet ist, der nach außen hin und an seinen Enden offen ist, um das längliche Glied (2) aufzunehmen.

8. Vorrichtung nach Anspruch 7, dadurch gekennzeichnet, daß der Zapfen (9) so angeordnet ist, daß er um eine mittlere Achse (21) gedreht werden kann, und daß der Schlitz (24) mit zwei parallelen, voneinander beabstandeten Stützflächen (25, 26) ausgebildet ist, die in unterschiedlichem Abstand (A, B) von der mittleren Achse positioniert sind und zum Stutzen länglicher Glieder mit zwei unterschiedlichen Dicken bestimmt sind, die durch eine Spannungskraft gleicher Größe gespannt werden sollen, wobei die gleiche Vorrichtung (1) mit diesen Gliedern unterschiedlicher Dicke verwendet werden kann und dabei die Größe der Reaktionskraft des elastisch nachgebenden Teils (12) aufrechterhalten bleibt.

9. Vorrichtung nach einem der vorhergehenden Ansprüche, dadurch gekennzeichnet, daß die Stoßflächen (11) an den äußeren Enden (30) der Elemente (10) in Form vorragender Stifte (32) vorliegen, um die das längliche Glied (12) gewickelt werden kann, wobei sich die Stifte durch in dem zugehörigen Element (10) ausgebildete Befestigungslöcher (33) erstrecken, wobei die Stifte, die an der Elementfläche, an welcher die stoßflächen positioniert sind, gegenüberliegt, positioniert sind, Befestigungen (34) zur Sicherung des elastisch nachgebenden Teils (12) bilden.

10. Vorrichtung nach einem der vorhergehenden Ansprüche, dadurch gekennzeichnet, daß es sich bei dem elastisch nachgebenden Teil (12) um eine Zugfeder (35) handelt, deren Enden über Verbindungeunterlegscheiben (37) an den Befestigungen (34) der Stifte (32) gesichert sind, wobei die Feder von einer Schutzhülse (38) umschlossen ist.

11. Vorrichtung nach einem der vorbergehenden Ansprüche, dadurch gekennzeichnet, daß es sich bei dem länglichen flexiblen Glied (12) um einen in einer Riemenübertragung enthaltenen Riemen handelt, und zwar vorzugsweise um einen Antriebsriemen (31), der um in einem Verbrennungsmotor enthaltene Scheiben (4, 65 , 7) geführt wird.

## Revendications

1. Dispositif pour indiquer une tension prédéterminée d'éléments flexibles allongés (2), comprenant une base (8), un moyeu (9) associé à la base et faisant saillie par rapport à celle-ci, et englobant un moyen (23) pour supporter l'élément allongé (2), deux éléments de liaison (10) reliés en pivotement à la base (8) à leur première extrémité interne (27) et s'avançant dans des directions opposées à partir de ladite base (8) essentiellement en formant des angles droits par rapport au moyeu (9), chaque élément de liaison (10) étant muni, à son extrémité externe opposée (30), d'une butée (11), lesdites butées (11) étant espacées de manière équidistante du moyeu (9) pour supporter l'élément allongé (2), et un élément (12) apte à manifester une élasticité par résilience relié aux éléments de liaison (10) et possédant une force réactionnelle correspondant à la tension prédéterminée de l'élément allongé, lesdits éléments de liaison (10) étant arrangés pour effectuer un mouvement pivotant synchronisé entre deux positions terminales stables (C, D) tandis qu'ils passent par une ligne imaginaire (E) reliant l'un à l'autre les moyens de butée (11) devant le moyeu (9) pour effectuer un mouvement d'encliquetage, l'élément allongé (2) étant arrangé, lorsque les éléments de liaison (10) prennent une de leurs positions terminales (C), pour se déplacer dans une position dans laquelle il vient buter contre les butées (11) des éléments de liaison et contre le support (23) du moyeu (9), et pour être serré au cours du mouvement pivotant synchronisé des éléments de liaison à l'encontre de l'action exercée par l'élément (12) apte à manifester une élasticité par résilience, jusqu'à ce que ledit élément allongé s'étende le long d'une ligne essentiellement rectiligne entre les butées, moment auquel la tension prédéterminée de l'élément allongé et la force réactionnelle de l'élément apte à manifester une élasticité par résilience s'égalisent, et, en réponse à l'élément apte à manifester une élasticité par résilience, lesdits éléments de liaison prennent leur position terminale opposée (D) par encliquetage, ledit mouvement d'encliquetage en soi étant une indication de l'obtention de la tension déterminée dudit élément allongé.

2. Dispositif selon la revendication 1, caractérisé en ce que la base (8) comprend à la fois une plaque de support (13) dans laquelle est pratiqué un évidement (14) qui est ouvert vers l'extérieur et à ses extrémités pour que viennent s'y loger les extrémités internes (27) des éléments de liaison (10), et une plaque de recouvrement (16) recouvrant l'évidement dans la plaque de support vers l'extérieur, et en ce que la plaque de support, la plaque de recouvrement et les éléments de liaison, dans la zone de leurs extrémités internes, présentent des trous alignés (28) pour que viennent s'y loger des pivots (29) au moyen desquels les éléments de liaison sont reliés en pivotement à la base.

3. Dispositif selon la revendication 2, caractérisé en ce que des butées (39) sont prévues dans l'évidement (14) pratiqué dans la plaque de support (13) dans le but de limiter l'angle du mouvement pivotant des éléments de liaison (10), lesdites butées déterminant ainsi les deux positions terminales stables (C, D) des éléments de liaison.

4. Dispositif selon l'une quelconque des revendications précédentes, caractérisé en ce que, en position adjacente à leurs extrémités internes (27) et à un endroit situé plus à l'intérieur que les pivots (29), les éléments de liaison (10) sont reliés l'un à l'autre au moyen d'un mécanisme de synchronisation (42) garantissant la mobilité pivotante synchronisée des éléments de liaison.

5. Dispositif selon la revendication 4, caractérisé en ce que ledit mécanisme de synchronisation (42) comprend une broche (43) s'étendant à travers des trous alignés (44) pratiqués dans les éléments de liaison (10), un desdits trous étant essentiellement circulaire, tandis que l'autre est essentiellement oblong, la broche étant à même d'effectuer un certain mouvement latéral qui compense le mouvement latéral mutuel des trous se produisant au cours du mouvement pivotant des éléments de liaison autour des pivots (29) entre les deux positions terminales stables (C, D).

6. Dispositif selon la revendication 5, caractérisé en ce que, dans la zone du mécanisme de synchronisation (42), des évidements opposés (45) sont pratiqués dans les éléments de liaison (10), par lesquels les portions les plus à l'intérieur des extrémités internes (27) des éléments de liaison se chevauchent et viennent buter l'une contre l'autre, le mécanisme de synchronisation (42) venant s'y loger, et en ce que les éléments de liaison sont munis de faces marginales internes (46) qui viennent buter contre des faces marginales opposées (47) formées dans lesdits éléments de liaison dans la zone de fusion entre ces dernières et les évidements (45) de telle sorte que les faces marginales et les faces marginales opposées forment des faces de came coopérantes qui, lors du mouvement pivotant synchronisé des éléments de liaison à l'encontre de l'action de l'élément (12) apte à manifester une élasticité par résilience, déterminent l'endroit d'encliquetage des éléments de liaison.

7. Dispositif selon l'une quelconque des revendications précédentes, caractérisé en ce que le moyeu (9) est relié à la base (8) au moyen d'une plaque d'adaptation (17), ladite plaque d'adaptation, conjointement avec la plaque de support (13) et la plaque de recouvrement (16), étant assemblée à l'aide des moyens de fixation (22) en relation de face à face pour former un logement, et en ce que le support (23) dans le moyeu (9) présente une fente transversale (24) qui est ouverte vers l'extérieur et à ses extrémités pour que vienne s'y loger l'élément allongé (2).

8. Dispositif selon la revendication 7, caractérisé en ce que le moyeu (9) est arrangé pour tourner autour d'un axe central (21) et en ce que la fente (24) est munie de deux faces de support parallèles espacées (25, 26) positionnées à des distances différentes (A, B) de l'axe central et conçues pour supporter des éléments allongés de deux épaisseurs différentes qui doivent être serrés à l'aide d'une force de serrage d'intensité égale, le même dispositif (1) pouvant être utilisé avec ces éléments d'épaisseurs différentes, tout en maintenant l'intensité de la force réactionnelle de l'élément (12) apte à manifester une élasticité par résilience.

9. Dispositif selon l'une quelconque des revendications précédentes, caractérisé en ce que les butées (11) aux extrémités externes (30) des éléments de liaison (10) sont en forme de broches saillantes (32) autour desquelles l'élément allongé (12) peut s'enrouler, lesdites broches s'étendant à travers des trous d'adaptation (33) pratiqués dans l'élément de liaison associé (10), les broches positionnées sur la face de l'élément de liaison opposée à celle sur laquelle sont positionnées les butées, formant des dispositifs (34) pour fixer l'élément (12) apte à manifester une élasticité par résilience.

10. Dispositif selon l'une quelconque des revendications précédentes, caractérisé en ce que l'élément (12) apte à manifester une élasticité par résilience est un ressort de tension hélicoïdal (35) dont les extrémités sont fixées aux dispositifs de fixation (34) des broches (32) via des rondelles de liaison (37), ledit ressort étant renfermé dans un manchon de protection (38).

11. Dispositif selon l'une quelconque des revendications précédentes, caractérisé en ce que l'élément flexible allongé (12) est une courroie incorporée dans une transmission par courroie, de préférence une courroie d'entraînement (31) supportée autour des poulies (4, 65, 7) incorporées dans un moteur à combustion.
